# EUROPÄISCHE PATENTSCHRIFT

(11) **EP 3 784 438 B1**
(45) Veröffentlichungstag und Bekanntmachung des Hinweises auf die Patenterteilung: **19.01.2022**
(21) Anmeldenummer: 19719879.9
(22) Anmeldetag: 25.04.2019
(51) Int. Cl.: B25B 7/02, B25B 7/08, B25B 7/22, H02G 1/00, H02G 1/12

(54) **ZANGE**
PLIERS
PINCE

(30) Priorität: 26.04.2018 DE 102018110105
(43) Veröffentlichungstag der Anmeldung: 03.03.2021
(73) Patentinhaber: Knipex-Werk C. Gustav Putsch KG, 42349 Wuppertal (DE)
(72) Erfinder: LIEDTKE, Tim, 42653 Solingen (DE); RIEPE, Bernd, 42389 Wuppertal (DE)
(74) Vertreter: Müller, Enno
(86) Internationale Anmeldenummer: PCT/EP2019/060637
(87) Internationale Veröffentlichungsnummer: WO 2019/207054

(56) Entgegenhaltungen:
- EP-A1- 2 709 804
- US-A1- 2016 181 772
- US-B1- 6 588 039

## Beschreibung

### Gebiet der Technik

Die Erfindung betrifft eine Zange nach den Merkmalen des Oberbegriffes des Anspruches 1.

### Stand der Technik

Bei einer aus der US 2016/0181772 A1 bekannten Zange ist zwischen nebeneinander angeordneten ersten und zweiten Schneiden einerseits ein Zwischensteg ausgebildet, der sich über weniger als ein größtes Öffnungsmaß der Öffnung erstreckt und andererseits auf der jeweils anderen Seite ein Trennsteg, der sich über mehr als ein größtes Öffnungsmaß erstreckt. Im geschlossenen Zustand sind nur die Trennstege übereinandergefahren.

Aus der US 6 588 039 B1 sind die Schneiden beidseitig von Stegen umgeben, die sich jeweils über mehr als ein größtes Öffnungsmaß des Öffnungsquerschnittes erstrecken.

Aus der EP 2 709 804 B1 ist eine Zange mit Scherschneiden bekannt, wobei die Scherschneiden im geschlossenen Zustand der Zange in einem gelenkfernen Bereich über ein größeres Maß übereinandergefahren sind als in einem gelenkferneren Bereich. Die flachbackenartigen Greifflächen dieser Zange sind über einen Teil ihrer Länge strukturiert. Diesbezüglich sind auch vollständig strukturierte Greifflächen bekannt.

### Zusammenfassung der Erfindung

Ausgehend von einem Stand der Technik gemäß der US 2016/0181772 A1 beschäftigt sich die Erfindung mit der Aufgabenstellung, zum Abisolieren vorteilhafte erste und zweite Schneiden nebeneinander anzugeben.

Diese Aufgabe ist beim Gegenstand des Anspruches 1 gelöst.

Die Schneiden sind bevorzugt gemäß der Materialwahl der Zangenschenkel Hartmetallschneiden. Diese können, wie auch bevorzugt nicht nur materialeinheitlich, sondern darüber hinaus auch einstückig mit dem jeweiligen Zangenschenkel ausgebildet sein.

Jede Schneide jedes Zangenschenkels weist mit Bezug auf einen Grundriss, in welchem Grundriss sich die Drehachse der Zangenschenkel als Punkt darstellt, bevorzugt eine halbkreisartig verlaufende Ausnehmung auf. Diese kann weiter mit Bezug auf den Grundriss streng einer Kreislinie folgen, darüber hinaus entsprechend etwa einem Halbkreis oder mehr. Auch kann die halbkreisartig verlaufende Ausnehmung durch eine in Umfangsrichtung betrachtete Aneinanderreihung gerade verlaufender Schneidenabschnitte gegeben sein. So kann sich beispielsweise eine im Wesentlichen V-förmig verlaufende Ausnehmung einer jeden Schneide einstellen.

Im geschlossenen Zustand der Zange ergeben die miteinander wirkenden halbkreisartig verlaufenden Ausnehmungen der ersten und zweiten Schneide einen insgesamt freibleibenden Öffnungsquerschnitt. Dieser Öffnungsquerschnitt entspricht im Wesentlichen dem Aderdurchmesser des von dem Isolationsmantel zu befreienden Kabels. Der Außendurchmesser des Isolationsmantels ist entsprechend größer als es dem größten quer zur Erstreckung der Drehachse betrachteten Erstreckungsmaß im Öffnungsquerschnitt entspricht.

Zwischen zwei in Längserstreckungsrichtung der Zangenschenkel nebeneinander vorgesehenen ersten beziehungsweise zweiten Schneiden, weiter zwischen dementsprechend ausgebildeten Ausnehmungen dieser Schneiden, ergeben sich die Zwischenstege, die insbesondere in der Zangenschließstellung eine Abgrenzung des Öffnungsquerschnitts des einen Schneidenpaares zu dem Öffnungsquerschnitt des benachbarten Schneidenpaares bieten. Ein solcher Zwischensteg weist eine in Schließrichtung der Zangenschenkel betrachtete Erstreckungslänge auf, die in der Zangenschließstellung eine Überlappung der aufeinander zu weisenden freien Enden der Zwischenstege beider Zangenschenkel zulässt. Das in Schließrichtung hierbei betrachtete Überlappungsmaß beider Zwischenstege - mit Bezug auf eine Projektion in eine quer zur Drehachse verlaufenden Schneidebene - kann hierbei kleiner sein als das größte Erstreckungsmaß des Öffnungsquerschnittes in der Zangenschließstellung, insbesondere des Öffnungsquerschnittes eines unmittelbar benachbarten Schneidenpaares, bis hin zu etwa gleich dem größten Erstreckungsmaß.

Die zwei nebeneinander angeordneten ersten beziehungsweise zweiten Schneiden, zwischen welchen sich der vorbeschriebene Zwischensteg ergibt, sind wiederum jeweils auf der anderen Seite zu dem Zwischensteg von dem Trennsteg flankiert. Auch dieser Trennsteg bildet eine Begrenzung des Öffnungsquerschnittes in der Zangenschließstellung, darüber hinaus aber auch, wie bevorzugt, eine Anlage für das abzuisolierende Kabel und gegebenenfalls eine Führung des Kabels im Zuge des Abisoliervorganges. Hierzu kann, wie bevorzugt, der Trennsteg eine in Schließrichtung betrachtete Erstreckungslänge aufweisen, die um ein Mehrfaches größer ist als die in selber Richtung betrachtete Erstreckungslänge eines Zwischensteges. So kann dieses Erstreckungsmaß größer gewählt sein als das größte Erstreckungsmaß des Öffnungsquerschnittes in der Zangenschließstellung. Die Erstreckungslänge des Trennsteges kann hierbei weiter etwa dem 2- bis 5-Fachen, weiter etwa dem 3- bis 4-Fachen der Erstreckungslänge des Zwischensteges entsprechen.

Diese bevorzugte Ausgestaltung führt im Zuge der Zangenschließbewegung dazu, dass die Trennstege beider Zangenschenkel vorlaufend übereinander fahren und so eine sichere Führung des abzuisolierenden Kabels in Richtung auf die unmittelbar zugeordneten ersten und zweiten Schneiden bieten. Die Zwischenstege gelangen im Zuge dieser Zangenschließbewegung bevorzugt noch vor einem vollständigen Durchtrennen der Kabelisolation in ihre Übereinanderlage, so dass entsprechend bereits vor Erreichen der Zangenschließstellung und entsprechend vor Erreichen der vollständigen Durchtrennung des Kabelmantels der Öffnungsquerschnitt des entsprechenden Schneidenpaares umfangsmäßig geschlossen sein kann.

Die Erfindung schlägt weiter vor, dass bei einer Zange mit übereinandergefahrenen ersten und zweiten Scherschneiden darauf abgestellt ist, dass die erste Scherschneide eine Schneidkante mit unterschiedlichen Schneidbereichen aufweist, wobei ein erster Schneidenbereich, der in dem Bereich des Maßes größter Überdeckung gegeben ist, bezogen auf die Gesamtlänge der Schneidkante einen in Richtung zu dem Gelenk bezüglich der Mittelebene abfallenden Schneidkantenabschnitt aufweist mit einem bezogen auf die Gesamtlänge der Schneidkante ersten Abfallmaß, wobei ein zweiter Schneidenbereich ein zweites Abfallmaß aufweist, das größer ist als das erste Abfallmaß und wobei ein dritter Schneidenbereich ein drittes Abfallmaß aufweist, das geringer ist als das erste und zweite Abfallmaß, wobei die Länge jedes Schneidenbereichs einem Fünfte. oder mehr der Gesamtlänge der Scherschneide entspricht.

Die so gewählte Schneidkantengeometrie führt zu einem verbesserten Schneidergebnis. Die Bedienerfreundlichkeit ist erhöht, da zufolge der gegebenen Geometrie der Kraftaufwand zum Schneiden eines Schneidguts, beispielsweise eines Kabels, gegenüber den bekannten Schneidgeometrien verringert ist. Darüber hinaus ist zufolge der gegebenen Geometrie auch ein günstiges Schneiden von Schneidgütern unterschiedlicher Querschnittsausgestaltungen und Dicken in günstiger Weise möglich.

Im Wesentlichen kann sich die Schneidkante in zumindest drei Schneidabschnitte aufteilen, die - gesehen in Richtung des Gelenkbereiches - in einer möglichen Ausgestaltung von einem Maß größter Überdeckung zu einem Maß kleinster Überdeckung zu der zweiten Schneide ineinander übergehen. Das jeweilige Abfallmaß, insbesondere des Schneidkantenabschnittes des ersten, bevorzugt gelenkfernen Schneidenbereiches, und weiter bevorzugt des Schneidkantenabschnitts des zweiten, gegebenenfalls mittleren Schneidenbereiches, kann sich insbesondere in der Zangenschließstellung ergeben aus der Differenz zweier um ein vorgegebenes Abstandsmaß entlang der Mittellinie zueinander distanzierter Abstandswerte des jeweiligen Schneidkantenabschnitts zu der Mittelebene. Im Falle eines größeren Abfallmaßes fällt der diesbezügliche Schneidkantenabschnitt auf einem auf der Mittelebene abgetragenen Abstandsmaß steiler ab als in einem vergleichbaren Schneidkantenabschnitt mit geringerem Abfallmaß, welches über denselben Abstand auf der Mittelebene betrachtet ist.

So kann das Abfallmaß des zweiten, bevorzugt mittleren Schneidenbereichs etwa dem Drei- bis Zehnfachen, weiter etwa dem Vier- bis Sechsfachen des Abfallmaßes im ersten, gelenkfernen Schneidenbereich entsprechen. Das Abfallmaß im dritten, bevorzugt gelenknahen Schneidenbereich ist bevorzugt kleiner als das Abfallmaß im gelenkfernen, ersten Schneidenbereich, kann weiter beispielsweise dem 0,1- bis 0,5-Fachen des Abfallmaßes im ersten Schneidenbereich entsprechen. Auch kann das Abfallmaß gleich Null sein, so dass der diesbezügliche Schneidkantenabschnitt unter gleichbleibender Beabstandung zur Mittelebene verlaufen kann.

Darüber hinaus kann gemäß einer bevorzugten Ausgestaltung jeder Schneidkantenabschnitt insbesondere des ersten und des zweiten Schneidenbereiches in Richtung auf den Gelenkbereich abfallend gestaltet sein (zumindest mit Bezug auf die Zangenschließstellung), während der dritte, gelenknahe Schneidenbereich ein Abfallmaß aufweisen kann, das annähernd gleich Null sein kann oder darüber hinaus im Vergleich zu den Abfallmaßen der ersten und zweiten Schneidbereiche sogar ein Negativmaß besitzen kann. Entsprechend kann der dritte Schneidenbereich einen Schneidkantenabschnitt aufweisen, der von dem Gelenkbereich abweisend hin zu dem mittleren, zweiten Schneidenbereich abfällt.

Die bevorzugt drei unmittelbar aufeinander folgenden Schneidenbereiche können über die Gesamtlänge der so gebildeten Scherschneide betrachtet gleichmäßig hinsichtlich ihrer jeweiligen Länge verteilt ausgebildet sein, so dass jeder Schneidenbereich etwa einem Drittel der Gesamtschneidenlänge entsprechen kann. Auch kann insbesondere der zweite, mittlere Schneidenbereich hinsichtlich der in der Zangenschließstellung in die Mittelebene projizierten Gesamtlänge der Schneide etwa einem Fünftel bis einem Viertel der Gesamtlänge entsprechen, während die beidseitig sich anschließenden ersten und dritten Schneidenbereiche etwa gleich lang gewählt sein können.

Auf den gelenkfernen ersten Schneidenabschnitt mit dem Maß größter Überdeckung in der Zangenschließstellung folgt der zweite Übergangs-Schneidenabschnitt, der - bezogen auf seine Längserstreckung - in einer Projektion auf die Scherebene die größte Unterschiedlichkeit in Bezug auf das Maß der Überdeckung zu der zweiten Scherschneide aufweist.

Im Zusammenhang mit einer solchen Schneidenausbildung kann gemäß einer möglichen Weiterbildung beim Schließen der Zangenschenkel in der Stellung einer ersten Berührung der ersten und zweiten Schneide in einem Berührungspunkt die verbleibende Öffnungskontur zwischen den ersten und zweiten Schneidkanten der Scherschneiden in Bezug auf eine quer zur Schneidebene und sich durch die Drehachse und den Berührungspunkt erstreckende Mittelebene symmetrisch ausgebildet sein. So können beide Scherschneiden auch insgesamt im Wesentlichen gleich ausgebildet sein, insbesondere hinsichtlich ihrer Schneidkantenverläufe.

Kombinativ zu der vorgestellten Lösung der Aufgabe kann auch vorgesehen sein, dass beim Schließen der Zangenschenkel in der Stellung einer ersten Berührung der ersten Scherschneide und zweiten Scherschneide in einem Berührungspunkt die verbleibende Öffnungskontur zwischen den ersten und zweiten Schneidkanten der Scherschneiden in Bezug auf eine quer zur Schneidebene und sich durch die Drehachse und den Berührungspunkt erstreckende Mittelebene asymmetrisch ist.

Die Berührung beziehungsweise der Berührungspunkt ergibt sich bevorzugt allein mit Bezug auf eine Projektion der Schneidkanten in eine gemeinsame Schneidebene.

So kann beispielsweise die Schneidkante der ersten oder zweiten Scherschneide, wie beispielsweise aus dem Stand der Technik bekannt, gleichmäßig gerundet und von der Mittelebene aus betrachtet konkav gekrümmt verlaufen, während die Schneidkante der anderen Scherschneide eine von dieser bevorzugt gleichmäßig verrundeten Schneidkante abweichende Schneidkantenkontur aufweist.

Durch die asymmetrische Ausgestaltung insbesondere im Moment einer ersten Berührung ist ein günstiges Schneidergebnis erzielbar. Darüber hinaus kann hierdurch auch eine handhabungsgünstige Ausgestaltung der Zange erreichbar sein derart, dass mit bevorzugt weniger Kraftaufwand gegenüber den aus dem Stand der Technik bekannten Lösungen ein Schneidvorgang durchgeführt werden kann.

Bei einer ersten gelenkfernen Berührung der Scherschneiden im Zuge eines Zusammenfahrens der Zangenschenkel ist zwischen den Schneiden durch die Schneidkanten eine Öffnung begrenzt, deren Öffnungsrandkanten zu der Mittelebene unsymmetrisch verlaufen, wobei gelenkfern zunächst über mindestens ein Fünftel der Gesamtlänge der Schneidkante projiziert auf die Mittelebene eine sich im Wesentlichen bevorzugt zu mehr als 80 Prozent auf einer Seite der Mittelebene befindliche Öffnungsfläche begrenzt sein kann. Hieraus kann sich eine Ausgestaltung ergeben, bei welcher im Moment einer solchen ersten Berührung die Öffnungsfläche im gelenkfernen Bereich kleiner ist als im gelenknahen Bereich und/oder zumindest nahezu allein auf nur einer Seite der Mittelebene ausgebildet ist. Das in der Öffnung einliegende Schneidgut wird gegebenenfalls, beispielsweise bei einem Flachkabel, im gelenkfernen Bereich partiell durchtrennt und hiernach infolge weiterer Schließverlagerung der Zangenschenkel beziehungsweise der Schneiden in Richtung auf den Gelenkbereich sukzessive durchtrennt. Das Schneidgut wird zufolge der gegebenen Schneidengeometrie im Zweifel im Zuge des Schneidvorganges zumindest tendenziell in Richtung auf den Gelenkbereich gedrängt. Dies führt zu einem günstigen Schneidprozess und -ergebnis.

Die Öffnungsfläche kann mit zunehmender Schließung der Öffnung eine, abgesehen von etwaigen Rundungsgeometrien, dreieckförmige Gestalt einnehmen. Eine solche dreieckförmige Öffnungsgestalt kann sich beispielsweise nach einem vollständigen Überfahren des gelenkfernen, ersten Schneidenbereiches über die gegenüberliegende Scherschneide einstellen, wobei die dreieckige Öffnungskontur sich im Wesentlichen in diesem Moment durch den Schneidenkantenabschnitt des gelenknahen Schneidenbereichs der ersten Scherschneide, dem sich hieran anschließenden Schneidenkantenabschnitt des mittleren, zweiten Schneidenbereichs und dem in dieser Stellung diese beiden Schneidenbereiche quasi überspannenden Bodenabschnitt der Schneidenkante der zweiten Schneide zusammensetzen kann.

Auch kann die Öffnungskontur durch einen ersten konvexen Verlauf der ersten Schneidkante, insbesondere im ersten und zweiten Schneidenbereich der ersten Scherschneide, mit einem gegenüberliegenden konkaven Verlauf der zweiten Schneidkante gegeben sein.

Darüber hinaus kann die Öffnungskontur durch einen weiteren konkaven Verlauf der ersten Schneidkante, beispielsweise im dritten, gelenkbereichnahen Schneidenabschnitt, gegenüberliegend zu dem konkaven Verlauf der zweiten Schneidkante gegeben sein.

Der im Wesentlichen durch den ersten Schneidenbereich gegebene konvexe Schneidkantenverlauf ist über den mittleren, zweiten Schneidenbereich mit dem im Wesentlichen konkav verlaufenden zweiten Schneidenbereich verbunden. Allen Schneidbereichen der ersten Schneidkante liegt in bevorzugter Ausgestaltung ein über die gesamte Länge durchgehend konkav verlaufende Schneidkante gegenüber, wobei dieser konkave Verlauf über die gesamte Länge der Schneidkante annähernd gleichbleibend gewählt sein kann.

Auch kann der konkave Verlauf der ersten Schneidkante mit einem geringeren Krümmungsmaß versehen sein als der konkave Verlauf der zweiten Schneidkante. Das Krümmungsmaß des konkaven Verlaufs der ersten Schneidkante, insbesondere im gelenknahen dritten Schneidenbereich, kann sogar so gering ausfallen, dass sich allein in diesem gelenknahen dritten Schneidenbereich ein mit Bezug auf eine Projektion in die Schneidebene geradliniger Verlauf der diesbezüglichen Schneidkante einstellen kann. Ein konkaver Verlauf des dritten Schneidenbereichs kann sich insgesamt durch die sich in Erstreckungsrichtung beidseitig anschließenden Bereiche (einerends der Gelenkbereich und anderenends der zweite Schneidenbereich) einstellen.

Auch kann gemäß einer weiter bevorzugten Ausgestaltung eine der ersten oder zweiten Schneide zugewandte Randkante des Trennsteges stufenartig gestaltet sein derart, dass - im geschlossenen Zustand der Zange betrachtet - etwa beginnend mit dem halben Öffnungsmaß des Öffnungsquerschnitts eine stufenartige Erweiterung des Öffnungsquerschnittes (im nicht geschlossenen Zustand der Zange) beziehungsweise eine Verjüngung des Trennsteges quer zur Schließrichtung der Zange gegeben ist.

Zufolge der stufenartigen Ausgestaltung ist zunächst und im Wesentlichen eine handhabungstechnisch günstige Führung des abzuisolierenden Kabels in Richtung auf die zugeordnete Schneidenausnehmung gegeben. Das abzuisolierende Kabel stützt sich im Zuge eines Abisoliervorganges bevorzugt beidseitig der zugeordneten Ausnehmung mit ihrem Isolationsmantel an der stufenartigen Erweiterung und anderenends der Ausnehmung an dem zugeordneten Zwischensteg ab. Hierdurch kann zugleich auch eine Zentrierung des abzuisolierenden Kabels mit Bezug auf die zugeordnete Ausnehmung erreicht sein.

Die stufenartige Verjüngung kann etwa im Bereich einer halben Erstreckungslänge des Trennsteges ausgebildet sein, darüber hinaus gegebenenfalls im Bereich eines ersten Drittels der Erstreckung, ausgehend von einem in Schließrichtung der Zange tiefsten Punkt der zugeordneten Ausnehmung. In weiter bevorzugter Ausgestaltung bilden benachbarte Schneiden eines Zangenschenkels im geschlossenen Zustand der Zange unterschiedlich große Öffnungsquerschnitte aus. Entsprechend sind bevorzugt diese Schneiden angepasst an unterschiedliche Litzen- beziehungsweise Kabeldurchmesser. Die Öffnungsquerschnitte können angepasst sein an übliche Litzenquerschnitte, so beispielsweise 0,2, 0,3, 0,8,1,5, 2,5 oder 4 mm².

Auch können an einem Zangenschenkel mehrere Trennstege ausgebildet sein, wobei zwei Trennstege desselben Zangenschenkels unterschiedliche Erstreckungslängen aufweisen können. Darüber hinaus können - über die Länge des Zangenschenkels betrachtet - mehrere Gruppen von ersten beziehungsweise zweiten Schneiden, die durch Trennstege zueinander distanziert sind, vorgesehen sein.

Trennstege, an denen sich in Längserstreckung der Zangenschenkel beidseitig Schneidenausnehmungen anschließen, können gemäß einer möglichen Ausgestaltung gleiche Erstreckungslängen in Zangenschließrichtung betrachtet aufweisen. Andere Trennstege, beispielsweise den Abisolierbereich insgesamt zu einem gegebenenfalls weiteren sich in Schenkellängsrichtung anschließenden Abschnitt trennende Stege können hingegen größere oder auch kleinere Erstreckungslängen aufweisen. So können beispielsweise größere Trennstege eine Erstreckungslänge aufweisen, die etwa dem 1,5- bis 3-Fachen, weiter etwa dem 2-Fachen der Erstreckungslänge der weiteren Trennstege entsprechen kann.

Die Trennstege weisen darüber hinaus in Zangenschließrichtung weisende freie Stirnflächen auf, die in ihrem Verlauf mit einer Schneidebene einen spitzen Winkel einschließen. Dieser spitze Winkel kann, wie bevorzugt, etwa 30 bis 60 Grad betragen, weiter beispielsweise etwa 45 Grad.

Zwischen- und/oder Trennstege sind in bevorzugter Ausgestaltung an beiden Zangenschenkeln ausgebildet, dies weiter bevorzugt in gleicher Ausgestaltung bezüglich ihrer Erstreckungslängen und Breitenmaße quer zur Erstreckungslänge. So kann weiter bevorzugt quasi eine symmetrische Anordnung von Trennstegen und Zwischenstegen beider Zangenschenkel gegeben sein. Darüber hinaus können die Zangenschenkel zumindest bezüglich des Abisolierbereiches mit dessen Schneiden, Trenn- und Zwischenstegen gleich ausgestaltet sein.

Eine Zange kann auch zwei nebeneinander angeordnete erste und zweite Schneiden aufweisen, die zwischen sich einen Zwischensteg belassen, der, gesehen von einem in Schließrichtung der Zange tiefsten Punkt der zugeordneten Ausnehmung, sich weniger als ein größtes Erstreckungsmaß des Öffnungsquerschnitts in Schließrichtung der Zange erstreckt, jedoch so, dass die Zwischenstege beider Zangenschenkel bei geschlossener Zange in einem Bereich übereinandergefahren sind und wobei die Ausnehmungen jeweils auf der anderen Seite zu dem Zwischensteg von einem Trennsteg überragt sind, der, gesehen von einem in Schließrichtung der Zange tiefsten Punkt der Ausnehmung, sich über mehr als ein größtes Öffnungsmaß des Öffnungsquerschnitts in Schließrichtung der Zange erstreckt, und wobei weiter die Schneiden mit dem zugeordneten Zangenschenkel materialeinheitlich ausgebildet sind.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 2- bis 10-Fach auch die Offenbarung von 2,1- bis 10-Fach, 2- bis 9,9-Fach, 2,1- bis 9,9-Fach etc. Diese Offenbarung kann einerseits zur Eingrenzung einer genannten Bereichs grenze von unten und/ oder oben, alternativ oder ergänzend aber zur Offenbarung eines oder mehrerer singulärer Werte aus einem jeweiligen angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist, und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Zange in perspektivischer Darstellung, betreffend die Schließstellung;
- Fig. 2: einen Ausschnitt der Zange in Draufsicht, betreffen die Stellung gemäß Figur 1;
- Fig. 3: die Rückansicht zu Figur 2;
- Fig. 4: den vergrößerten Schnitt gemäß der Linie IV-IV in Figur 2, in vergrößerter Darstellung;
- Fig. 5: den Schnitt gemäß der Linie V-V in Figur 4;
- Fig. 6: die Herausvergrößerung des Bereiches VI in Figur 5;
- Fig. 7: die Herausvergrößerung des Bereiches VII in Figur 2, jedoch die Zangen-Offenstellung betreffend, bei in einem Schneidenbereich einliegenden Schneidgut;
- Fig. 8: eine Folgedarstellung zu Figur 7 im Zuge eines Schneidvorganges zufolge Drehverlagerung der Zangenschenkel in Richtung auf eine Schließstellung;
- Fig. 9: eine vergrößerte schematische Darstellung der sich in einer Stellung gemäß Figur 8 ergebenden Schneidöffnung;
- Fig. 10: eine Folgedarstellung zu Figur 8, die Schließstellung betreffend;
- Fig. 11: eine der Figur 9 im Wesentlichen entsprechende schematische Darstellung, die Schneidenstellung gemäß Figur 10 betreffend;
- Fig. 12: eine der Figur 3 entsprechende Darstellung, jedoch betreffend eine zweite Ausführungsform;
- Fig. 13: die Herausvergrößerung des Bereiches XIII in Figur 12;
- Fig. 14: den Schnitt gemäß der Linie XIV-XIV in Figur 13 durch den Bereich eines zwischen ersten und zweiten Schneiden verbleibenden freien Öffnungsquerschnitts;
- Fig. 15: den Schnitt gemäß der Linie XV-XV in Figur 13 durch den Bereich eines Zwischensteges;
- Fig. 16: den Schnitt gemäß der Linie XVI-XVI in Figur 13 durch den Bereich eines Trennsteges;
- Fig. 17: eine perspektivische Darstellung des in Figur 13 dargestellten Abisolierbereiches;
- Fig. 18: den Schnitt XVIII-XVIII in Figur 14 bei leicht geöffnetem Zangenmaul;
- Fig. 19: die Herausvergrößerung des Bereiches XIX in Figur 18;
- Fig. 20: in schematischer Darstellung den Abisolierbereich eines Zangenschenkels mit Schneiden, Zwischenstegen und Trennstegen;
- Fig. 21: eine der Figur 20 entsprechende Darstellung;
- Fig. 22: einen Ausschnitt des Abisolierbereichs in schematischer Darstellung, betreffend eine Zwischenstellung im Zuge einer Zangenschließbewegung;
- Fig. 23: eine Folgedarstellung zu Figur 22 im Zuge der weiteren Zangenschließbewegung;
- Fig. 24: eine Folgedarstellung zu Figur 23, betreffend die Zangenschließstellung;
- Fig. 25: eine der Figur 7 entsprechende Darstellung, betreffend eine weitere Ausführungsform;
- Fig. 26: die weitere Ausführungsform in einer Darstellung gemäß Figur 8;
- Fig. 27: eine der Figur 10 entsprechende Darstellung, betreffend die Ausführungsform gemäß Figur 25.

### Beschreibung der Ausführungsformen

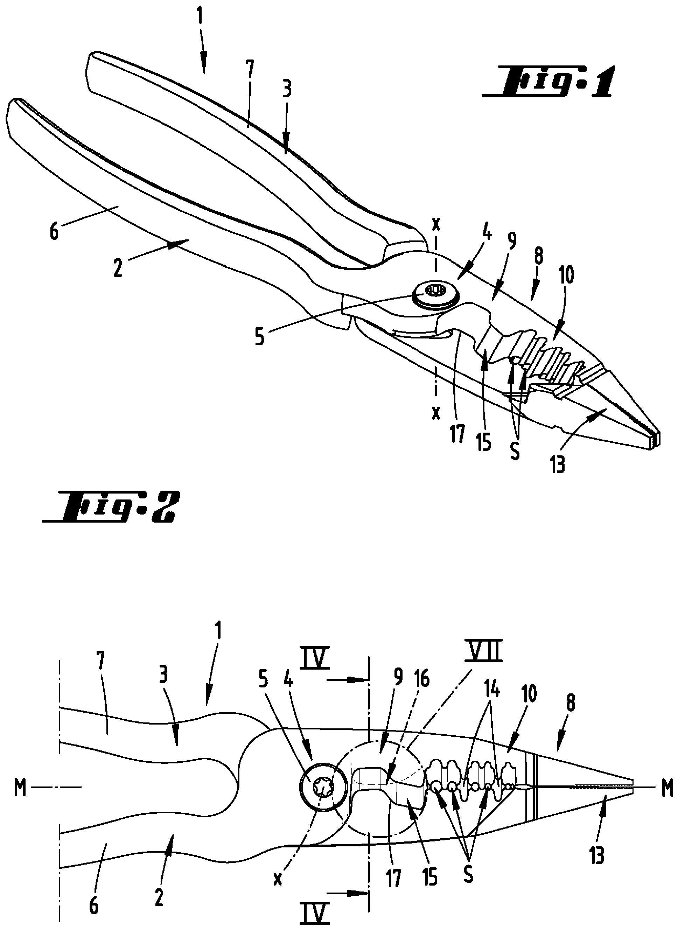

Dargestellt und beschrieben ist, zunächst mit Bezug zu Figur 1, eine Zange 1 mit einem ersten Zangenschenkel 2 und einem zweiten Zangenschenkel 3. Die Zangenschenkel 2 und 3 sind sich überkreuzend in einem Gelenkbereich 4 um eine geometrische Drehachse x drehbar zueinander gehaltert, hierbei über einem Gelenkbolzen 5.

Die Zangenschenkel 2 und 3 bilden auf der einen Seite des Gelenkbereiches 4 Griffabschnitte 6 und 7 aus und auf der anderen Seite des Gelenkbereiches 4 einen Maulbereich 8.

Der Maulbereich 8 weist im Einzelnen hintereinander, d.h. bezogen auf eine senkrecht zu einer Dreh- und Scherebene E gerichtete, die Drehachse x aufnehmende Mittelebene M nacheinander ausgebildete und unterschiedliche Maulabschnitte auf, so zunächst gelenknah, d.h. bevorzugt unmittelbar folgend auf den Gelenkbereich 4, einen Schneidbereich 9, hierauf folgend einen Abisolierbereich 10 mit nacheinander ausgebildeten, unterschiedlichen Schneidausbildungen 11 und einen abschließenden, dem freien Ende der Zangenschenkel 2 und 3 zugeordneten Flachbackenbereich 13.

Die Schneidausbildungen S im Abisolierbereich 10 sind jeweils von zwei zusammenwirkenden, an dem ersten Zangenschenkel 2 beziehungsweise zweiten Zangenschenkel 3 entsprechend gegenüberliegend ausgebildeten ersten 11 und zweiten Schneiden 12 gebildet, wobei in dem dargestellten Ausführungsbeispiel fünf hintereinander angeordnete Schneidausbildungen S mit in Schließstellung der Zange 1 gemäß den Darstellungen in den Figuren 1 und 2 unterschiedlichen Durchmessern vorgesehen sind.

Zur optischen und haptischen Unterteilung der Schneidausbildungen S und für ein schnelles intuitives Finden der für den abzuisolierenden Draht wichtigen Schneidausbildung S auch bei schlechten Lichtverhältnissen sind in dem dargestellten Ausführungsbeispiel sowohl an dem ersten Zangenschenkel 2 als auch in dem zweiten Zangenschenkel 3 Trennstege 14 vorgesehen, die die Schneidausbildungen S beispielsweise in drei Gruppen je zwei beziehungsweise eine Schneidausbildung S unterteilen. Die Trennstege 14 überfahren in der Zangenschließstellung die Mittelebene M und liegen an der zugewandten ebenen Rückfläche des anderen Zangenschenkels an.

Die Position der einzelnen Schneidausbildungen S für die einzelnen Querschnitte sind so leichter für den Anwender zu merken. Darüber hinaus fungieren die Trennstege 14 auch als eine Art Anschlag, die es dem Anwender ermöglicht, die richtige Schneidausbildung S rein haptisch zu finden, ohne auf die Zange schauen zu müssen. Dies ist insbesondere in schlecht beleuchteten Umgebungen, wie sie auf Baustellen häufig vorzufinden sind, ein Vorteil.

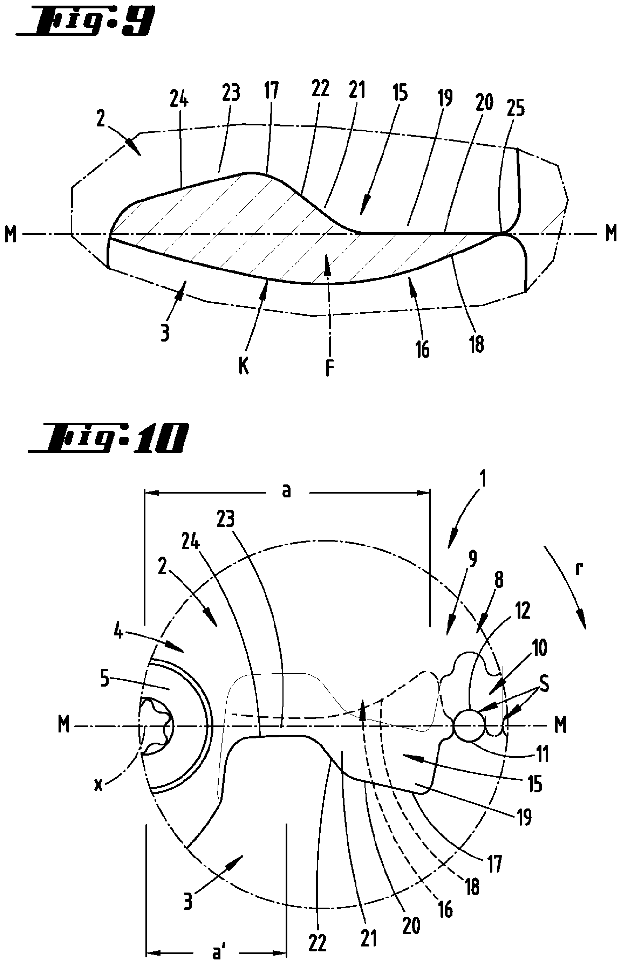

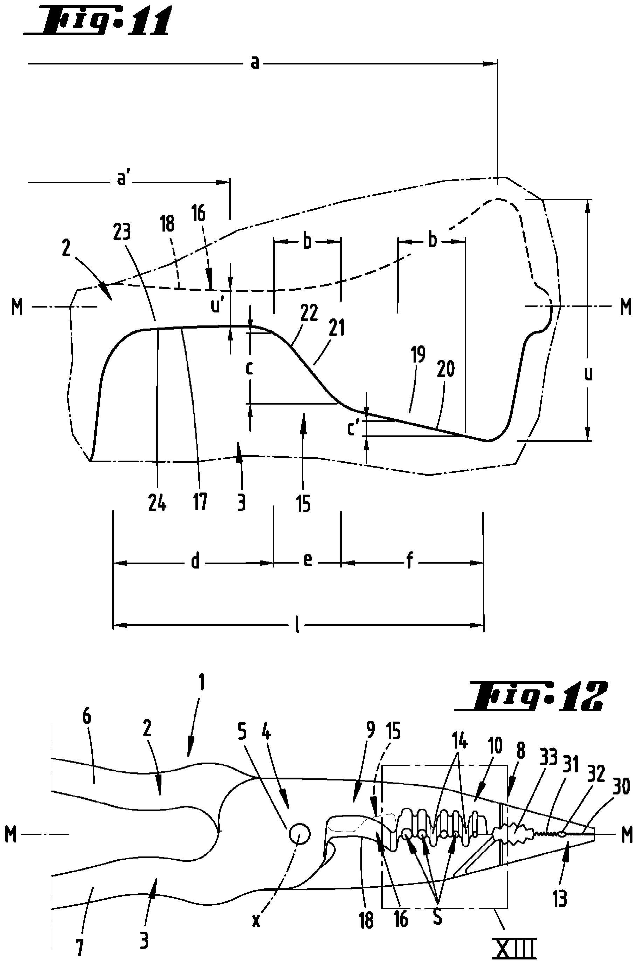

Darüber hinaus formen beide Zangenschenkel 2 und 3 benachbart zu der Schneidausbildung S erste und zweite Scherschneiden 15, 16 aus, die bei geschlossener Zange 1 scherenartig übereinander gefahren sind (siehe gestrichelte Darstellung der Scherschneide 16 in Figur 10 und 11).

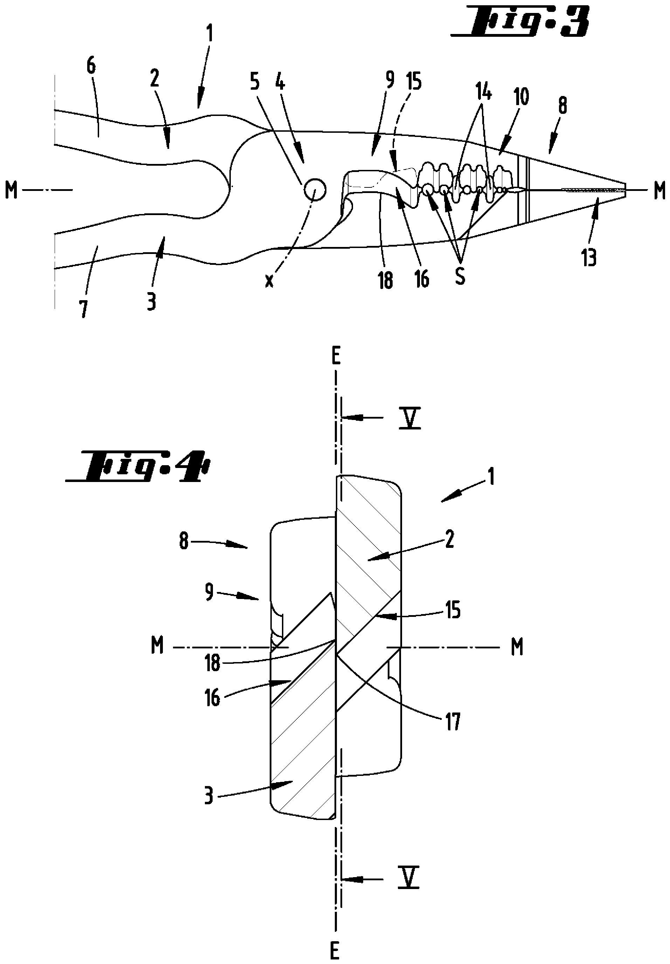

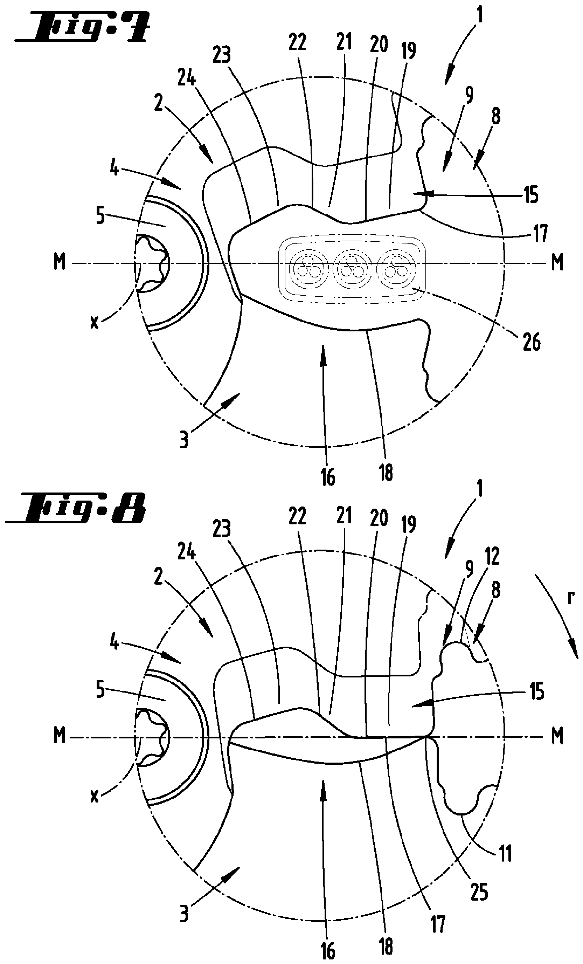

Die zweite Schneidkante 18 der zweiten Scherschneide 16 ist in der in den Figuren 1 bis 12 dargestellten ersten Ausführungsform mit Bezug auf eine Grundrissdarstellung, beispielsweise gemäß Figur 7, weiter mit Bezug auf eine Projektion in die Scherebene E, betrachtet ausgehend von der Mittelebene M, durchgehend konkav geformt, weiter bevorzugt entlang einer sich zumindest kontinuierlich krümmenden Linie verlaufend.

Die erste Schneidkante 17 der ersten Scherschneide 15 ist in der ersten Ausführungsform mit Bezug auf die Mittelebene M asymmetrisch zu der gegenüberliegenden zweiten Schneidkante 17 geformt, wobei eine Länge 1 der beiden Schneidkanten 17 und 18 bei einer senkrechten Projektion der jeweiligen Schneidkante in die Mittelebene M gleich lang gewählt sein kann.

Die Schneidkante 17 der ersten Scherschneide 15 weist im Wesentlichen einen - von der Mittelebene M aus betrachtet - gelenknahen konkaven Verlauf und einen sich hieran gelenkfern anschließenden konvexen Verlauf auf.

Die Schneidengeometrie ist weiter so gegeben, dass in einer Zangenschließstellung gemäß den Figuren 10 und 11 die beiden Scherschneiden 15 und 16 in einem gelenkfernen Bereich der Schneidausbildung S, bezogen auf einen Abstand a zu der Drehachse x, ein größeres Überdeckungsmaß u aufweisen als in einem gelenknahen Bereich, der mit einem Maß a' zu der Drehachse x beabstandet ist (vergleiche Figur 11). Das in dem gelenknahen Bereich gegebene Überdeckungsmaß u' entspricht etwa dem 0,1 bis 0,3-Fachen, weiter etwa dem 0,15- bis 0,2-Fachen des Überdeckungsmaßes u im gelenkfernen Bereich.

Im Wesentlichen setzt sich die erste Scherschneide 15 aus drei hintereinander vorgesehenen Schneidenbereichen mit unterschiedlichen Erstreckungen der jeweiligen Schneidkantenabschnitte zusammen. Hierbei ist ein gelenkferner, erster Schneidenbereich 19 in dem Bereich größter Überdeckung gegeben. Dieser erste Schneidenbereich 19 weist einen auf die Gesamtlänge l der diesbezüglichen Schneidkante 17 in Richtung zu dem Gelenkbereich 4 bezüglich der Mittelebene M abfallenden Schneidkantenabschnitt 20 auf.

An diesen schließt sich ein mittlerer, zweiter Schneidenbereich 21 mit einem Schneidkantenabschnitt 22 an, der wiederum abschließend übergeht in einen gelenknahen, dritten Schneidenbereich 23 mit einem Schneidkantenabschnitt 24.

Der erste Schneidenbereich 19 formt insbesondere zusammen mit dem zweiten Schneidenbereich 21 den vorbeschriebenen Schneidenbereich mit konvexem Verlauf, während der dritte Schneidenbereich 23 in Überschneidung mit dem mittleren beziehungsweise zweiten Schneidenbereich 21 im Wesentlichen den konkaven Verlaufsanteil der Schneidkante 17 bildet.

Mit Bezug auf eine senkrechte Projektion in die Mittelebene M ergibt sich etwa eine Länge e des mittleren, zweiten Schneidenbereichs 2, die etwa einem Fünftel der Gesamtlänge l der Schneidkante 17 entsprechen kann. Die diesbezüglichen Längen d und f des dritten und des ersten Schneidenbereiches 23,19 können in etwa gleich lang gewählt sein.

Mit Bezug auf eine Zangenschließstellung gemäß den Figuren 10 und 11 ergibt sich bei entsprechender Überdeckung der Scherschneiden 15 und 16 bezüglich der Schneidkante 17 im mittleren, zweiten Schneidenbereich 21 über eine senkrecht in die Mittelebene M projizierte Länge b ein Abfallmaß c des Schneidkantenabschnitts 22 im zweiten Schneidenbereich 21, welches mindestens dem Drei-Fachen bis hin zu dem Zehn-Fachen des über dieselbe Länge b betrachteten Abfallmaßes c' des Schneidkantenabschnittes 20 im ersten Schneidenbereich 19 entsprechen kann.

Es ergibt sich so ein stufenartiger Übergang zwischen dem ersten Schneidenbereich 19 und dem dritten Schneidenbereich 23, wobei der Übergang über einen Schrägverlauf des mittleren Schneidkantenabschnitts 22 gegeben ist. Auch ist in diesem mittleren Übergangs-Schneidenabschnitt mit Bezug auf die projizierte Länge b die größte Unterschiedlichkeit in Bezug auf das Maß der Überdeckung zu der zweiten Scherschneide 16 gegeben.

In dem dargestellten Ausführungsbeispiel verläuft der Schneidkantenabschnitt 24 des dritten Schneidenbereich 23 annähernd parallel zu der Mittelebene M, gegebenenfalls hierbei ein gegenüber den weiteren Bereichen der Scherschneide 15 negatives Abfallmaß aufweisend. Der Schneidkantenabschnitt 24 ist in der Zangenschließstellung zu der Mittelebene M beabstandet, etwa mit dem 0,8- bis 1,5-Fachen des diesbezüglichen Abstandes des gegenüberliegenden Bereiches der Schneidkante 18 der zweiten Scherschneide 16 zu der Mittelebene M.

Weiter ist die Geometrie der Scherschneiden 15 und 16 so gewählt, dass in einer Stellung einer ersten Berührung der ersten Scherschneide 15 und der zweiten Scherschneide 16 in einem Berührungspunkt 25 die verbleibende und bevorzugt rundum geschlossene Öffnungskontur K zwischen der ersten Schneidkante 17 und der zweiten Schneidkante 18 in Bezug auf die Mittelebene M, die in dieser Stellung bevorzugt den Berührungspunkt 25 schneidet, asymmetrisch geformt. So ist gemäß der Darstellung in Figur 9 die durch die Öffnungskontur K umschlossene und in Figur 9 in strichpunktierter Linienart schraffiert dargestellte Öffnungsfläche F einseitig der Mittelebene M durch die insgesamt konkav verlaufende Schneidkante 18 begrenzt. Dieser Schneidkante 18 gegenüberliegend verläuft die Schneidkante 17 dergestalt, dass deren Schneidkantenabschnitt 20 des ersten Schneidenbereichs 19 im Wesentlichen sich in der Mittelebene M beziehungsweise an dieser orientiert erstreckt, während der weitere Verlauf der Schneidkante 17 durch die stark abfallende Kontur des zweiten Schneidkantenabschnitts 22 und dem hieran anschließenden dritten Schneidkantenabschnitt 24 eine Erweiterung der Öffnungsfläche F über die Mittelebene M hinaus ergibt.

Es ergibt sich entsprechend ausgehend von dem Berührungspunkt 25 in Richtung auf den Gelenkbereich 4 etwa über die Länge f des ersten Schneidenbereiches 19 und somit etwa über ein Viertel bis ein Drittel der Gesamtlänge l eine Öffnungsfläche F, die sich zu 80 Prozent oder mehr, bis hin zu annähernd 100 Prozent nur auf einer Seite der Mittelebene M, nämlich bevorzugt zugewandt der kontinuierlich konkaven Schneidkante 18, ausformt.

Wie weiter insbesondere aus der Darstellung in Figur 9 zu erkennen, ergibt sich so eine etwa schuhförmige Öffnungsfläche F im Moment der Berührung der Scherschneiden 15, 16 im Berührungspunkt 25.

Im Zuge der weiteren Verlagerung der Zangenschenkel 2 und 3 in die Zangen-Schließstellung und damit einhergehender Verringerung der Öffnungsfläche F nimmt diese unter Nichtberücksichtigung von Rundungsgeometrien zwischen den einzelnen Schneidenbereichen der Scherschneide 16 zwischenzeitig eine dreieckförmige Gestalt ein, in welcher bedingt durch die Überdeckung der Scherschneiden 15 und 16 die Schneidkante 18 der zweiten Scherschneide 16 die Schneidkante 17 der ersten Scherschneide 15 im Bereich des Übergangs von erstem Schneidenbereich 19 in den zweiten Schneidenbereich 21 schneidet.

Zufolge der vorbeschriebenen Schneidengeometrie lässt sich in handhabungstechnisch günstiger Weise auch ein durchmessergroßes Schneidgut 26, wie bspw. ein Kabel, ohne erhöhten Kraftaufwand durchtrennen. Darüber hinaus auch in günstiger Weise im Querschnitt langgestreckt ovale oder rechteckförmige Gegenstände, wie bspw. Flachkabel. In Figur 7 ist ein solches Flachkabel als Schneidgut 26 in strichpunktierter Linienart angedeutet.

Durch die gegebene Schneidengeometrie erfolgt zunächst ein Einschneiden des Schneidgutes 26 im gelenkfernen Bereich unter Zusammenwirkung des konvexen Schneidenabschnittes im ersten Schneidenbereich 19 der ersten Scherschneide 15 und der gegenüberliegenden konkaven Schneidkante 18 der zweiten Scherschneide 16, wobei in weiteren Zuge des Schneidvorganges ein Durchtrennen ausgehend von dem gelenkfernen Bereich hin zum gelenknahen Bereich durchgeführt wird. Das Schneidgut 26 wird hierbei zumindest tendenziell in Richtung auf den Gelenkbereich 4 in die Schneidöffnung gedrängt.

Weiter kann durch die gegebene Schneidengeometrie eine Schnittkraftreduzierung von 20 bis 50 Prozent gegenüber den bekannten Lösungen erreicht werden.

Durch die im mittleren Schneidenbereich 21 sich einstellende Stufe kann ein eingelegtes Rundkabel spürbar einrasten, was dem Anwender einen Hinweis darauf gibt, dass das Kabel richtig in der Schneide einliegt. Darüber hinaus hält die Stufe das Rundkabel so möglichst nah dem Gelenkbereich, was stets die geringste Schnittkraft ermöglicht.

Die Schneidkanten 17 und 18 sind bevorzugt lasergehärtet.

Im spitzenseitigen Flachbackenbereich 13 sind die diesbezüglichen freien Enden der Zangenschenkel 2 und 3 mit aufeinander zu weisenden Greifflächen 27 und 28 ausgebildet. Diese bilden im geschlossenen Zustand der Zange 1 eine geometrische Zusammenwirkungsfläche Z, die in dem dargestellten Ausführungsbeispiel bevorzugt im Wesentlichen zusammenfällt mit der Mittelebene M.

Die Greifflächen 27 und 28 sind jeweils mit einer Strukturierung 29 in Form einer sehr feinen Diagonalverzahnung versehen. Diese sorgt für einen guten Halt, ohne dabei eine eventuelle Isolierung oder einen Draht beziehungsweise Litze zu beschädigen.

Die Strukturierung 29 kann sich vollständig oder auch nur teilweise über die Länge der jeweiligen Greiffläche 27, 28 erstrecken.

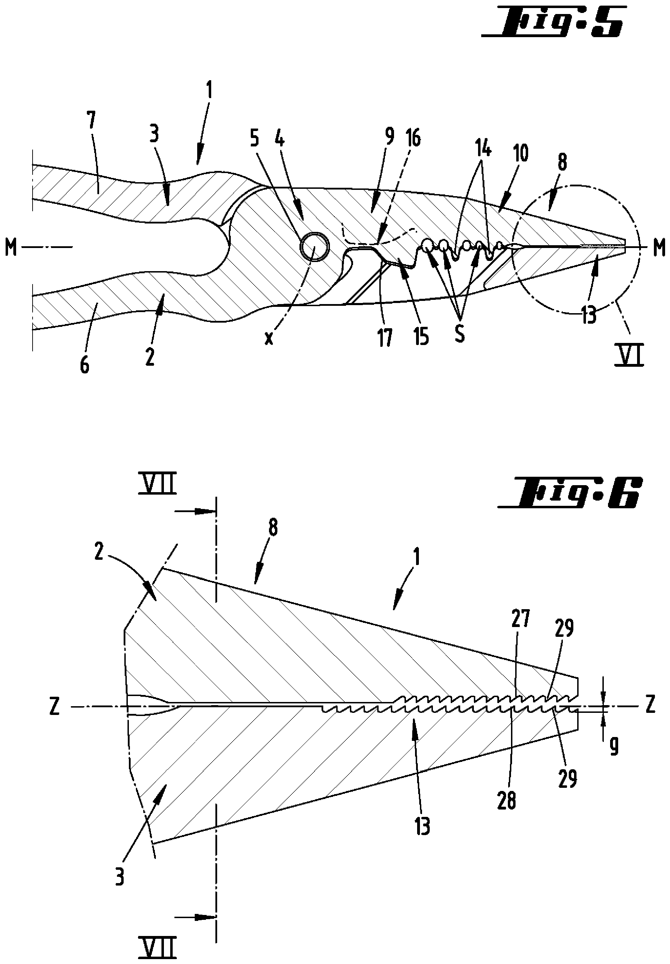

Weiter bildet die Strukturierung 29 mit Bezug auf einen Querschnitt senkrecht zur Mittelebene M gemäß beispielsweise der Darstellung in Figur 6 eine Sägezahnprofilierung mit einem - bezogen auf das Tal einer Strukturierung - gegebenen Strukturierungsabstand g zu der Zusammenwirkungsfläche Z.

Die Trennstege 14 im Bereich der Schneidausbildungen S zum Abisolieren von Drähten oder dergleichen können sich in einer Stellung zum Verzwirbeln von Drähten, in welcher Stellung die Drähte in bekannter Weise zwischen den Greifflächen 27 und 28 im Flachbackenbereich 13 gefasst sind, an der zugewandten ebenen Fläche des anderen Zangenschenkels abstützen und verhindern so ein Verwinden der Zangenspitze beim Drehen der Zangen 1 insgesamt um eine Längsachse.

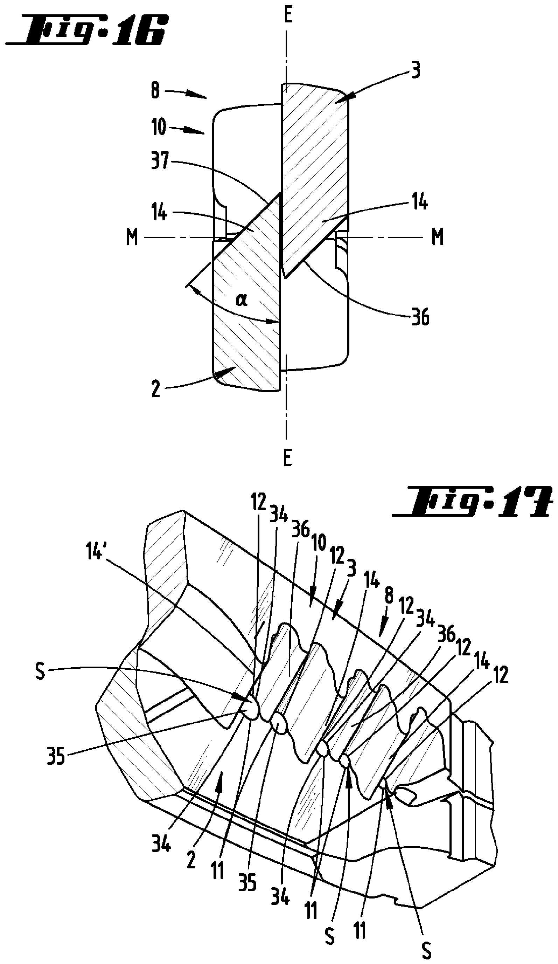

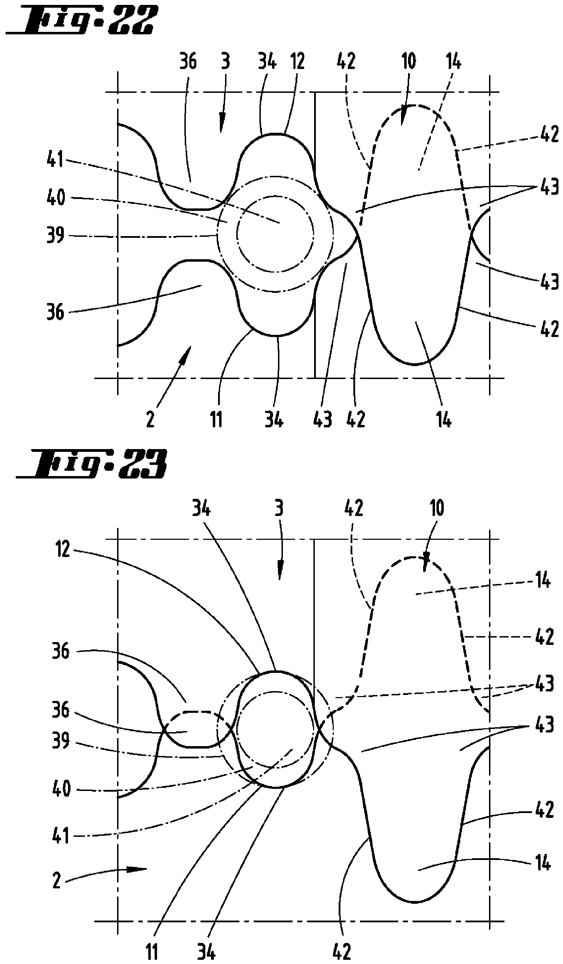

Die Figuren 12 bis 24 zeigen eine Ausführungsform der Zange 1, bei welcher der Flachbackenbereich 13 in Längserstreckungsrichtung der Zangenschenkel 2 und 3 betrachtet unterteilt ist in einen feinverzahnten, den freien Enden der Zangenschenkel 2 und 3 zugeordneten Greifbereich 30 und einem hiernach folgenden grob verzahnten Greifbereich 31. Die Greifbereiche 30 und 31 sind in Längserstreckung der Zange 1 zueinander distanziert unter Belassung einer sich in Zangenschließstellung einstellenden Greiföffnung 32.

Weiter ergibt sich in der Zangenschließstellung gemäß Figur 12 zwischen dem Flachbackenbereich 13 und dem Abisolierbereich 10 ein sogenanntes Brennerloch 33.

Der Abisolierbereich 10 ist im Wesentlichen gleichgestaltet wie bei dem ersten Ausführungsbeispiel.

So sind hier über die Länge der Zangenschenkel 2 und 3 betrachtet fünf Schneidausbildungen S vorgesehen, wobei jeweils zwei benachbarte Schneidausbildungen S im Wesentlichen zu einem Paar zusammengefasst sind.

So ist - ausgehend von dem Schneidbereich 9 - in Richtung auf den Flachbackenbereich 13 gesehen zunächst ein Paar Schneidausbildungen S unmittelbar anschließend an den Schneidbereich 9 vorgesehen, das zu einem weiteren, nachfolgenden Paar an Schneidausbildungen S durch einen Trennsteg 14 getrennt ist. Auch zwischen dem insgesamt mittleren Paar an Schneidausbildungen S und der fünften, in dem dargestellten Ausführungsbeispiel einzeln ausgebildeten Schneidausbildung S ist ein weiterer Trennsteg 14 vorgesehen, der gemäß den Darstellungen gleich ausgebildet sein kann, wie der zuvor beschriebene Trennsteg 14 zwischen den Paaren an Schneidausbildungen S.

Die sich an die Scherschneide 15 des Schneidbereiches 9 anschließende Flanke des ersten Zangenschenkels 2 formt zugewandt dem Abisolierbereich 10 einen weiteren Trennsteg 14' aus.

Jede Schneidausbildung S ist gebildet durch erste und zweite Schneiden 11, 12, die materialeinheitlich und bevorzugt einstückig mit dem ersten beziehungsweise zweiten Zangenschenkel 2, 3 ausgebildet sind.

Jede Schneide 11, 12 formt hierbei eine im Wesentlichen halbkreisartig verlaufende Ausnehmung 34, die sich in der Zangenschließstellung zusammen mit der Ausnehmung 34 der gegenüberliegenden Schneide 12, 11 zu einem im Wesentlichen im Grundriss kreisscheibenförmig freibleibenden Öffnungsquerschnitt 35 ergänzt.

Zwischen zwei in Längserstreckungsrichtung der Zangenschenkel 2, 3 unmittelbar aufeinanderfolgenden, nicht durch einen Trennsteg 14 getrennten ersten oder zweiten Schneiden 11, 12 ist ein Zwischensteg 36 ausgebildet.

Somit ist jede Ausnehmung 34 seitlich begrenzt durch entweder einen Zwischensteg 36 oder einen Trennsteg 14 beziehungsweise 14'.

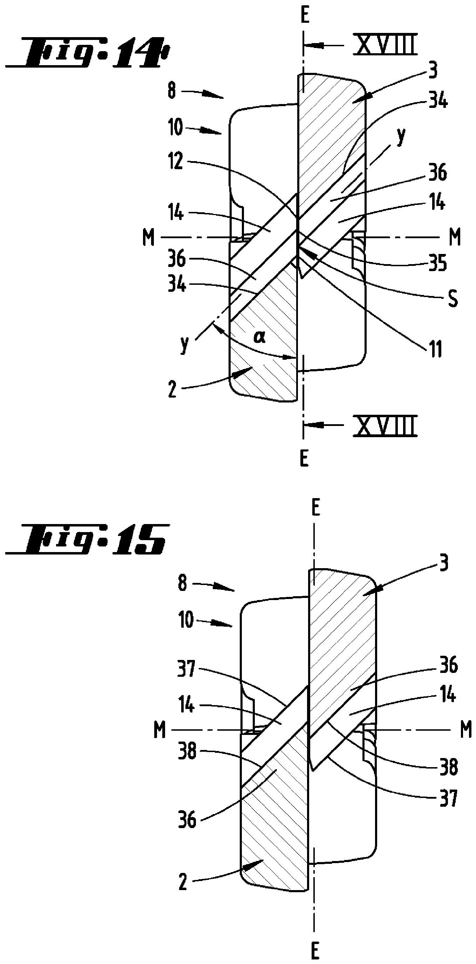

Wie beispielsweise aus der Schnittdarstellung in Figur 14 zu erkennen, verläuft eine zentrale Achse y der Ausnehmung 34 in einem spitzen Winkel α von etwa 45 Grad zu der Dreh- und Scherebene E. Denselben Winkel schließt darüber hinaus bevorzugt auch eine freie Stirnfläche 37 der Trennstege 14 zu der Dreh- und Scherebene E ein, wie weiter bevorzugt auch eine solche Stirnfläche 38 der Zwischenstege 36.

Die Schneidausbildungen S sind im geschlossenen Zustand der ersten und zweiten Schneiden 11, 12 mit unterschiedlich großen Öffnungsquerschnitten 35 ausgebildet. Diese sind entsprechend unterschiedlichen Litzen- beziehungsweise Kabeldurchmessern zuordbar.

Jeder sich in der Zangenschließstellung ergebende Öffnungsquerschnitt 35 einer jeden Schneidausbildung S weist ein größtes Öffnungsmaß k auf, welches bei einer bevorzugt kreisrunden Gestaltung dem Durchmesser des Öffnungsquerschnitts 35 entspricht. Diese Öffnungsmaße k sind bevorzugt angepasst an übliche Litzen- oder Drahtdurchmesser abzuisolierender Kabel 39. Ein solches Kabel 39 weist einen Isolationsmantel 40 auf, den es gilt, unter Nutzung der Schneidausbildungen S von der elektrisch leitfähigen Litze 41 beziehungsweise Draht zu entfernen.

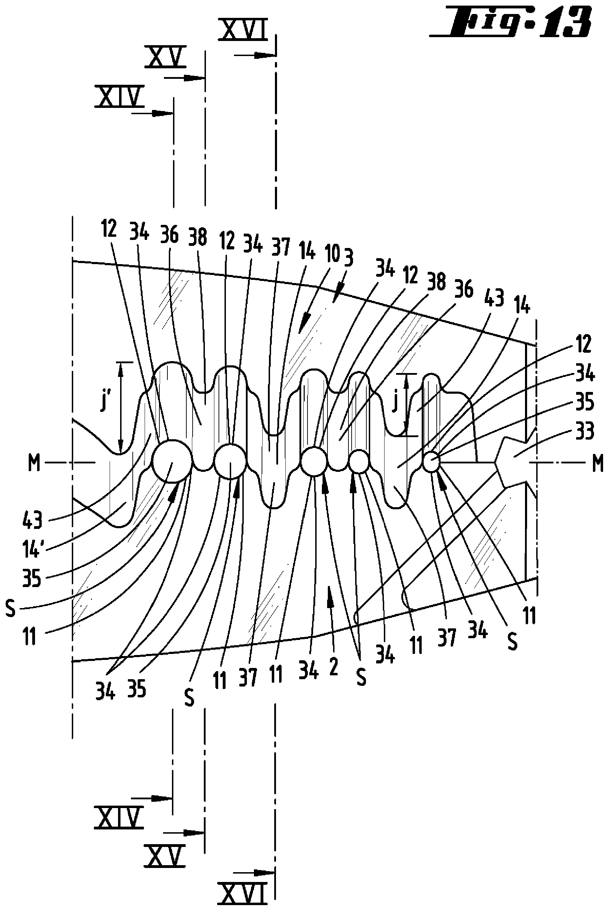

Jeder Trennsteg 14, insbesondere jeder beidseitig von Schneidausbildungen S beziehungsweise Ausnehmungen 34 flankierte Trennsteg 14, erstreckt sich mit Bezug auf einen Grundriss beispielsweise gemäß Figur 13 unmittelbar ausgehend von dem jeweiligen Ausnehmungsrand. Hierbei weisen die Trennstege 14 eine in Schließrichtung r der Zange 1 beziehungsweise senkrecht zur Mittelebene M betrachtete Erstreckungslänge j auf, die, gemessen von einem tiefsten Punkt P der benachbarten Ausnehmung 34, etwa dem 3-Fachen des Öffnungsmaßes k entsprechen kann.

Der jedenfalls weitere, nur einseitig von einer Ausnehmung 34 flankierte Trennsteg 14' kann demgegenüber eine vergrößerte Erstreckungslänge j' aufweisen. So kann die Erstreckungslänge j' eines ersten Trennsteges 14' etwa dem 2-Fachen der Erstreckungslänge j der weiteren Trennstege 14 desselben Zangenschenkels entsprechen.

Die in selber Richtung betrachtete Erstreckungslänge - ebenfalls ausgehend vom tiefsten Punkt P der unmittelbar benachbarten Ausnehmung 34 - des Zwischensteges 36 entspricht in dem dargestellten Ausführungsbeispiel etwa dem 0,7- bis 0,95-Fachen des Öffnungsmaßes k des Öffnungsquerschnittes 35. Entsprechend ragt der Trennsteg 14 in Schließrichtung r über den Zwischensteg 36 hinaus.

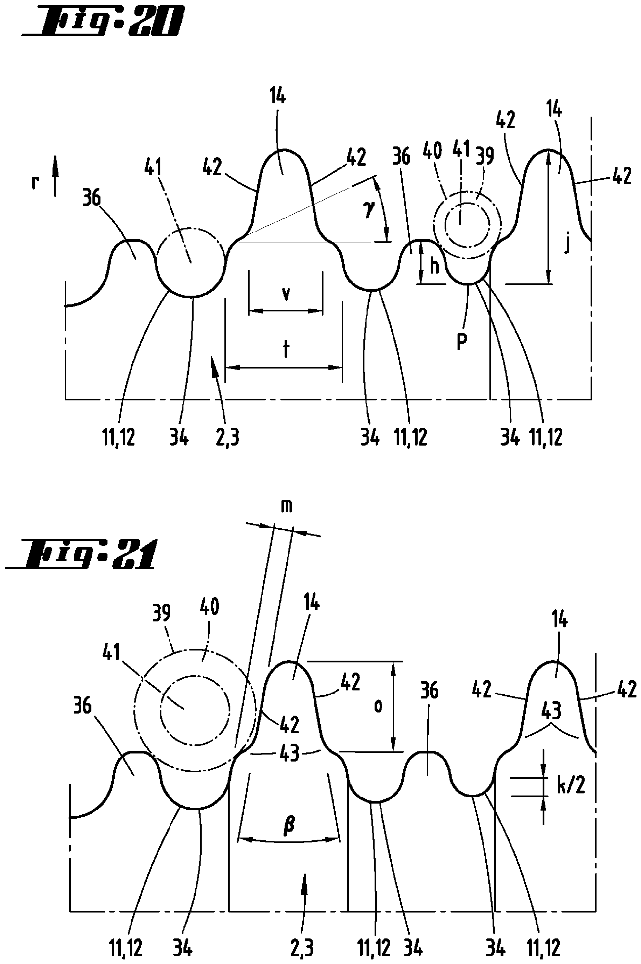

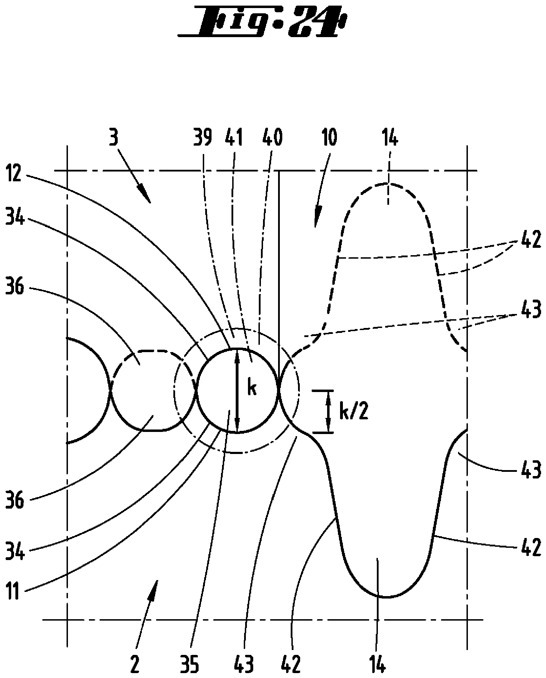

Weiter mit Bezug auf einen Grundriss beziehungsweise auf eine senkrechte Projektion des Trennsteges 14 in die Dreh- und Scherebene E ergibt sich an der der benachbarten ersten beziehungsweise zweiten Schneide 11, 12 zugewandten Randkante 42 des Trennsteges 14 eine stufenartige Gestaltung in Form einer Verjüngung 43 des Trennsteges 14. In der Zangenschließstellung (vergleiche beispielsweise Figur 24) ergibt sich etwa beginnend mit dem halben Öffnungsmaß k/2 des Öffnungsquerschnittes 35 die stufenartige Verjüngung 43 des Trennsteges 14 beziehungsweise mit Bezug auf eine Zangenoffenstellung die stufenartige Erweiterung des Öffnungsquerschnittes 35. Es ergibt sich so eine Verjüngung des Trennsteges 14 - betrachtet quer zur Längserstreckung des Trennsteges 14 -, hierbei ausgehend im Wurzelbereich unter Einlaufen in die Ausnehmungen 34 mit einem quer zur Längserstreckung betrachteten Breitenmaß t, welches etwa dem 1,5- bis 3-Fachen, weiter etwa dem 2-Fachen des reduzierten Breitenmaßes v hinter der Verjüngung 43 entsprechen kann (vergleiche auch Figur 20).

Der Flankenwinkel β der Trennstege 14, welcher Winkel durch die Randkanten 42 eingeschlossen ist, kann zwischen 0 und 90 Grad betragen, bevorzugt zwischen 10 und 60 Grad, weiter bevorzugt 20 Grad oder 30 Grad. Bei einem Winkel kleiner Null kann das Einlegen des Kabels 39 erschwert sein. Bei einem Winkel β über 90 Grad ergibt sich keine für den Nutzer fühlbare Anlagefläche, an die der Nutzer das Kabel 39 zur Positionierung anlegen kann.

Der Winkel γ (vergleiche Figur 20) der sich ergebenden Kante zwischen der Randkante 42 des Trennsteges 14 und der Randkante der Ausnehmung 34 beträgt bevorzugt zwischen 8 und 45 Grad, so weiter bevorzugt etwa 15 bis 30 Grad, weiter etwa 25 Grad. Hierdurch ist ein günstiges Abgleiten des Kabels 39 beim Schließen der Zange 1 in die zugewandte Ausnehmung 34 erreichbar. Darüber hinaus kann hierdurch eine günstige Selbstzentrierung des Kabels 39 erreicht werden.

Bei einem Winkel von beispielsweise weniger als 8 Grad kann sich im ungünstigen Fall eine Selbsthemmung einstellen. Bei ein Winkel γ von mehr als 45 Grad würde sich ein ungünstig großer Abstand zwischen dem Trennsteg 14 beziehungsweise dessen Randkante 42 und der Ausnehmung 34 einstellen.

Der Abstand m (vergleiche Figur 21) der Randkante 42 des Trennsteges 14 und der zugeordneten Flanke der Ausnehmung 34 ist bevorzugt größer als 0,5 mm, jedoch kleiner als das halbe Öffnungsmaß k. Dabei ergibt sich ein Vorteil bei einem Abstand m von mehr als 0,7 mm, da sich hierbei selbst Kabel 39 mit relativ dickem Isolationsmantel 40 in der Ausnehmung 34 beziehungsweise in der Schneidausbildung S zentrieren können. Jedoch soll der Abstand m so klein sein, dass das Kabel 39 beim Schließen der Zange 1 selbsttätig in die Ausnehmung 34 gleiten kann.

Der Abstand o zwischen dem höchsten Punkt des Trennsteges 14 und dem höchsten Punkt des Zwischensteges 36 kann, wie bevorzugt, größer sein als 1,5 mm, so beispielsweise 1,8 oder 2 mm. Hierdurch ist beim Positionieren des Kabels 39 eine fühlbare Anschlagfläche gegeben. Ist der Abstand geringer als 1,5 mm, kann es vorkommen, dass bei einem Anlegen des Kabels 39 dieses über den Trennsteg 14 hinaus abgleitet.

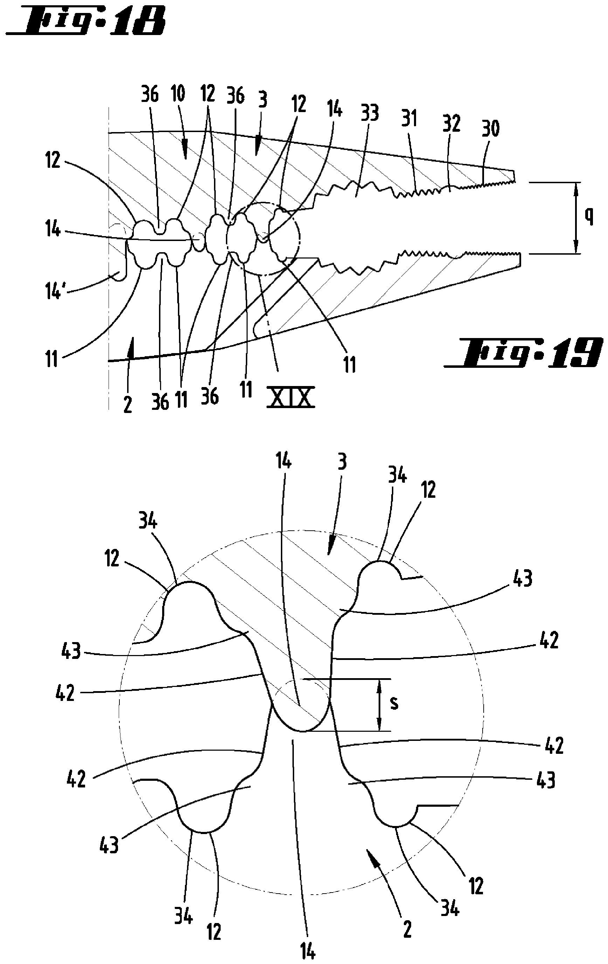

In einer Zangenmaulstellung, in welcher sich eine Öffnungsweite q von etwa 6 mm einstellt, kann, wie auch bevorzugt, ein Überdeckungsmaß s im Bereich der übereinandergleitenden Trennstege 14 beider Zangenschenkel 2 und 3 von etwa 1 mm gegeben sein (vergleiche Figuren 18 und 19), so dass auch in dieser nicht geschlossenen Zangenmaulstellung, beispielsweise beim Verzwirbeln von Kabeln, eine gegenseitige Abstützung erreicht werden kann und somit die Zange 1 torsionsversteift wird.

Gemäß den dargestellten Ausführungsbeispielen sind, wie auch bevorzugt, ist ein Trennsteg 14, sofern ein solcher Trennsteg nicht endseitig des gesamten Abisolierbereiches 10 ausgebildet ist (hier der Trennsteg 14'), beidseitig von einer Ausnehmung 34 beziehungsweise einer Schneidausbildung S flankiert, die bevorzugt allein dem Abisolieren von Einzeladern dienen.

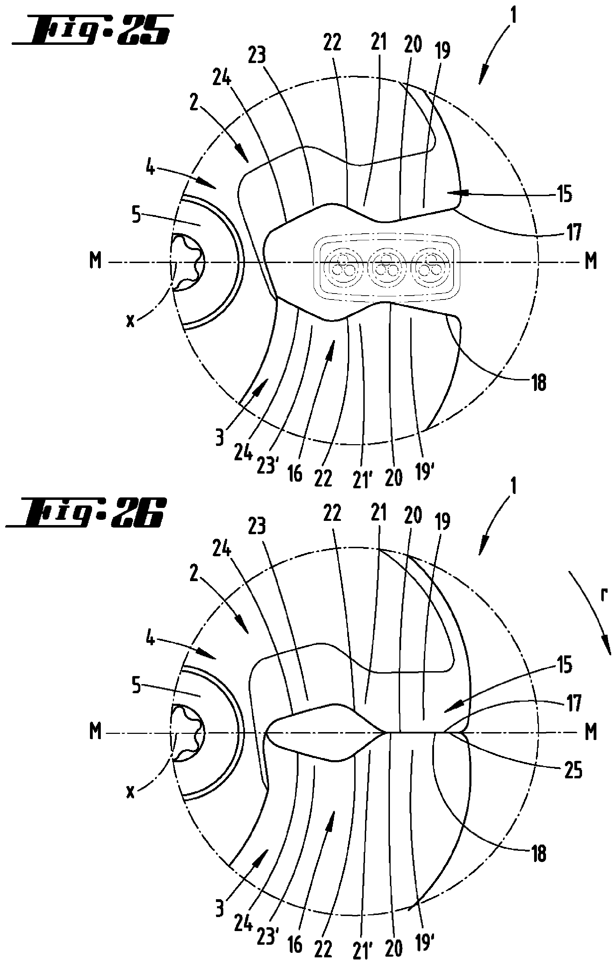

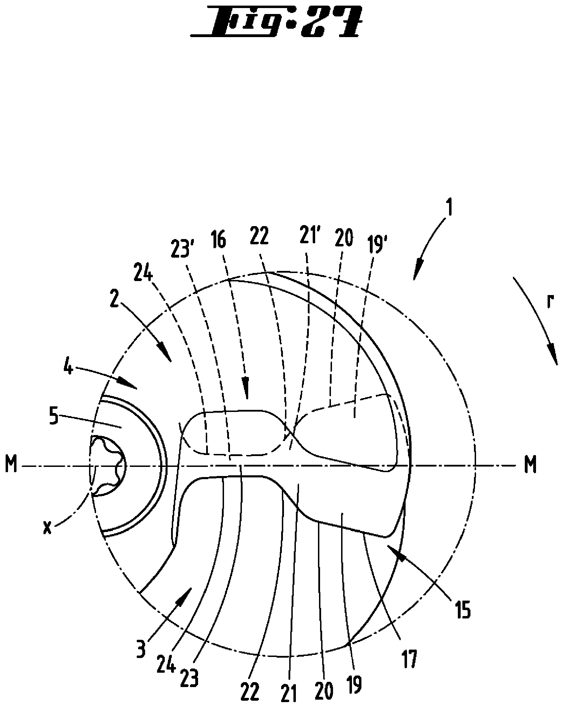

Die Figuren 25 bis 27 zeigen einen Schneidbereich 9 in alternativer Ausgestaltung, wobei die erste Scherschneide 15 entsprechend der anhand der in den Figuren 1 bis 12 beschriebenen Ausführungsform ausgebildet ist, entsprechend drei unterschiedliche Schneidenbereiche 19, 21 und 23 aufweist. Die zweite Scherschneide 16 weist eine Schneidkante 18 auf, die mit Bezug auf die Mittelebene M symmetrisch zu der Schneidkante 17 der ersten Scherschneide 15 geformt ist. Hierzu ergibt sich entsprechend auch entlang der Schneidkante 18 ein erster Schneidenbereich 19' mit einem ersten Abfallmaß gemäß dem Schneidenbereich 19 der ersten Schneidkante 17, ein zweiter Schneidenbereich 21' mit einem zweiten Abfallmaß gemäß dem Schneidenbereich 21' und ein dritter Schneidenbereich 23'.

Der Berührungspunkt 25 ergibt sich hierbei im Bereich der ersten Schneidenbereiche 19 und 19'.

## Patentansprüche

1. Zange (1) mit einem ersten und einem zweiten Zangenschenkel (2, 3), die in einem Gelenkbereich (4) mit einer Drehachse (x) drehbar zueinander gehaltert sind, wobei die Zangenschenkel (2, 3) auf einer Seite des Gelenkbereiches (4) einen Maulbereich (8) und auf der anderen Seite des Gelenkbereiches (4) Griffabschnitte (6, 7) ausbilden, wobei weiter der Maulbereich (8) eine Schneidausbildung (S) aufweist, mit für eine Abisolierung von Kabeln (39) zusammenwirkenden ersten Schneiden (11) an dem ersten Zangenschenkel (2) und zweiten Schneiden (12) an dem zweiten Zangenschenkel (3), wobei die ersten und zweiten Schneiden (11, 12) halbkreisartig verlaufende Ausnehmungen (34) aufweisen, wobei sich weiter die ersten und zweiten Schneiden (11, 12) mit ihren Ausnehmungen (34) bei geschlossener Zange (1) zu einem freibleibenden Öffnungsquerschnitt (35) ergänzen, wobei zwei nebeneinander angeordnete erste und zweite Schneiden (11, 12) zwischen sich einen Zwischensteg (36) belassen, der, gesehen von einem in Schließrichtung (r) der Zange (1) tiefsten Punkt (P) der zugeordneten Ausnehmung (34), sich über weniger als ein größtes Öffnungsmaß (k) des Öffnungsquerschnitts (35) in Schließrichtung (r) der Zange (1) erstreckt, wobei die Ausnehmungen (34) jeweils auf der anderen Seite zu dem Zwischensteg (36) von einem Trennsteg überragt sind, der, gesehen von einem in Schließrichtung (r) der Zange (1) tiefsten Punkt (P) der zugeordneten Ausnehmung (34), sich über mehr als ein größtes Öffnungsmaß (k) des Öffnungsquerschnitts (35) in Schließrichtung (r) der Zange (1) erstreckt, und wobei die Schneiden (11, 12) mit dem zugeordneten Zangenschenkel materialeinheitlich ausgebildet sind, **dadurch gekennzeichnet, dass** die Zwischenstege (36) beider Zangenschenkel (2, 3) bei geschlossener Zange (1) in einem Bereich übereinandergefahren sind.

2. Zange nach Anspruch 1, **dadurch gekennzeichnet, dass** eine der ersten oder zweiten Schneiden (11, 12) zugewandte Randkante (42) des Trennstegs (14) stufenartig gestaltet ist derart, dass in geschlossenem Zustand der Zange (1) betrachtet etwa beginnend mit dem halben Öffnungsmaß des Öffnungsquerschnitts (35) eine stufenartige Erweiterung des Öffnungsquerschnitts (35) beziehungsweise eine Verjüngung (43) des Trennsteges (14) quer zur Schließrichtung (r) der Zange (1) gegeben ist, und/oder, bevorzugt, dass die stufenartige Verjüngung (43) etwa im Bereich einer halben Erstreckungslänge (j) des Trennsteges (14) ausgebildet ist.

3. Zange nach einem der vorhergehenden Ansprüche, **dadurch gekennzeichnet, dass** benachbarte Schneiden (11, 12) im geschlossenen Zustand der Zange (1) unterschiedlich große Öffnungsquerschnitte (35) ausbilden.

4. Zange nach einem der vorhergehenden Ansprüche, **dadurch gekennzeichnet, dass** an einem Zangenschenkel (2, 3) mehrere Trennstege (14, 14') ausgebildet sind und dass zwei Trennstege (14, 14') unterschiedliche Erstreckungslängen (j, j') aufweisen, und/oder, bevorzugt, dass die Erstreckungslänge (j') eines ersten Trennsteges (14') eines Zangenschenkels (2, 3) etwa dem 2-Fachen der Erstreckungslänge (j) des zweiten Trennsteges (14) desselben Zangenschenkels (2, 3) entspricht, und/oder, bevorzugt, dass die Zwischen- und/oder Trennstege (36, 14) an beiden Zangenschenkeln (2, 3) ausgebildet sind.

5. Zange nach einem der vorhergehenden Ansprüche, **dadurch gekennzeichnet, dass** bei geschlossener Zange (1) bezüglich einer Scherebene (E) erste und zweite Scheren-Schneiden scherenartig übereinandergefahren sind und eine Drehachse bei senkrechtem Verlauf zu der Scherebene (E) in dem geschlossenen Zustand eine Mittelebene (M) durchsetzt, dass darüber hinaus die Scherenschneiden (15, 16) in einem gelenkfernen Bereich über ein größeres Maß (u) in Öffnungsrichtung der Zange (1) übereinandergefahren sind als in einem gelenknäheren Bereich, dass die erste Scherenschneide (15) eine Schneidkante (17) mit unterschiedlichen Schneidenbereichen (19, 21 und 23) aufweist, wobei ein erster Schneidenbereich (19), der in dem Bereich des Maßes (u) größter Überdeckung gegeben ist, bezogen auf die Gesamtlänge (l) der Schneidkante (17) einen in Richtung zu dem Gelenkbereich (4) bezüglich der Mittelebene (M) abfallenden Schneidkantenabschnitt (20) aufweist mit einem bezogen auf die Gesamtlänge (l) der Schneidkante (17) ersten Abfallmaß (c'), wobei ein zweiter Schneidenbereich (21) ein zweites Abfallmaß (c) aufweist, das größer ist als das erste Abfallmaß (c') und wobei ein dritter Schneidenbereich (23) ein drittes Abfallmaß aufweist, das geringer ist als das erste und zweite Abfallmaß (c, c'), wobei die Länge (d, e, f) jedes Schneidenbereichs (19, 21, 23) einem Fünftel oder mehr der Gesamtlänge (l) der Scherenschneide (15) entspricht.

6. Zange nach Anspruch 5, **dadurch gekennzeichnet, dass** beim Schließen der Zangenschenkel (2, 3) in der Stellung einer ersten Berührung der ersten Scherenschneide (15) und zweiten Scherenschneide (16) in einem Berührungspunkt (25) die verbleibende Öffnungskontur (K) zwischen den ersten und zweiten Schneidkanten (17,18) der Scherenschneiden (15,16) in Bezug auf eine quer zur Schneidebene (E) und sich durch die Drehachse (x) und den Berührungspunkt (25) erstreckende Mittelebene (M) symmetrisch ist.

7. Zange nach einem der Ansprüche 5 oder 6, **dadurch gekennzeichnet, dass** beim Schließen der Zangenschenkel (2, 3) in der Stellung einer ersten Berührung der ersten Scherenschneide (15) und der zweiten Scherenschneide (16) in einem Berührungspunkt (25) die verbleibende Öffnungskontur (K) zwischen den ersten und zweiten Schneidkanten (18, 17) der Scherenschneiden (15, 16) in Bezug auf eine quer zur Schneidebene (E) und sich durch die Drehachse (x) und den Berührungspunkt (25) erstreckende Mittelebene (M) asymmetrisch ist.

8. Zange nach einem der Ansprüche 6 oder 7, **dadurch gekennzeichnet, dass** die Öffnungskontur (K) durch einen ersten konvexen Verlauf der ersten Schneidkante (17) mit einem gegenüberliegenden konkaven Verlauf der zweiten Schneidkante (18) gegeben ist.

9. Zange nach einem der Ansprüche 6 bis 8, **dadurch gekennzeichnet, dass** die Öffnungskontur (K) durch einen weiteren konkaven Verlauf der ersten Schneidkante (17) gegenüberliegend zu dem konkaven Verlauf der zweiten Schneidkante (18) gegeben ist.

10. Zange nach einem der Ansprüche 8 oder 9, **dadurch gekennzeichnet, dass** der konkave Verlauf der ersten Schneidkante (17) mit einem geringeren Krümmungsmaß versehen ist als der konkave Verlauf der zweiten Schneidkante (18).

## Claims

1. Pliers (1) with a first and a second plier limb (2, 3), which are held rotatably relative to one another in an articulation region (4) with an axis of rotation (x), wherein the plier limbs (2, 3) form a jaw region (8) on one side of the articulation region (4) and handle sections (6, 7) on the other side of the articulation region (4), wherein the jaw region (8) also has a cutting pattern (S) with first blades (11) on the first plier limb (2) and second blades (12) on the second plier limb (3), wherein the first and second blades (11, 12) interact for stripping cables (39) and have semicircular recesses (34), and wherein the first and second blades (11, 12) with their recesses (34) furthermore complement one another so as to form a clear opening cross section (35) in the closed position of the pliers (1), wherein two adjacently arranged first and second blades (11, 12) leave an intermediate web (36) between one another, wherein said intermediate web extends over less than a maximum opening dimension (k) of the opening cross section (35) in the closing direction (r) of the pliers (1) viewed from a lowest point (P) of the associated recess (34) in the closing direction (r) of the pliers (1), wherein that the recesses (34) are projected by a separating web, which extends over more than a maximum opening dimension (k) of the opening cross section (35) in the closing direction (r) of the pliers (1) viewed from a lowest point (P) of the associated recess (34) in the closing direction (r) of the pliers (1), protrudes over the respective recesses (34) on each of the other sides of the intermediate web (36), and wherein the blades (11, 12) and the associated plier limbs are made of the same material, **characterized in that** the intermediate webs (36) of both plier limbs (2, 3) are in the closed position of the pliers (1) moved on top of one another.

2. The pliers according to claim 1, **characterized in that** an outer edge (42) of the separating web (14), which faces the first or second blade (11, 12), is realized in a step-like manner in such a way that, in the closed state of the pliers (1), a step-like widening of the opening cross section (35) or a taper (43) of the separating web (14) transverse to the closing direction (r) of the pliers (1) is respectively formed starting at approximately half the opening dimension of the opening cross section (35) and/or **in that** the step-like taper (43) preferably is formed approximately in the region of half the length (j) of the separating web (14).

3. The pliers according to one of the preceding claims, **characterized in that** adjacent blades (11, 12) form opening cross sections (35) of different sizes in the closed state of the pliers (1).

4. The pliers according to one of the preceding claims, **characterized in that** multiple separating webs (14, 14') are formed on a plier limb (2, 3) and two separating webs (14, 14') have different lengths (j, j') and/or **in that** the length (j') of a first separating web (14') of a plier limb (2, 3) preferably corresponds to approximately 2-times the length (j) of the second separating web (14) of the same plier limb (2, 3) and/or **in that** the intermediate webs and/or separating webs (36, 14) preferably are formed on both plier limbs (2, 3).

5. The pliers according to one of the preceding claims, **characterized in that** first and second shear blades are in the closed position of the pliers (1) moved on top of one another in a scissor-like manner with respect to the shear plane (E) and an axis of rotation extends in the closed state through a central plane (M) perpendicular to the shear plane (E), **in that** the shear blades (15, 16) furthermore are moved on top of one another to a greater degree (u) in the opening direction of the pliers (1) in a region lying remote from the articulation than in a region lying closer to the articulation, and **in that** the first shear blade (15) has a cutting edge (17) with different blade regions (19, 21 and 23), wherein a first blade region (19) formed in the region of the maximum degree of overlap (u) has referred to the overall length (1) of the cutting edge (17) a cutting edge section (20), which is sloped in the direction of the articulation region (4) with respect to the central plane (M) and with respect to the overall length (1) of the cutting edge (17) has a first degree of slope (c'), wherein a second blade region (21) has a second degree of slope (c) that is greater than the first degree of slope (c'), wherein a third blade region (23) has a third degree of slope that is smaller than the first and the second degree of slope (c, c'), and wherein the length (d, e, f) of each blade region (19, 21, 23) corresponds to one-fifth or more of the overall length (1) of the shear blade (15).

6. The pliers according to claim 5, **characterized in that** the opening contour (K) between the first and second cutting edges (17, 18) of the shear blades (15, 16), which remains in the position of an initial contact between the first shear blade (15) and the second shear blade (16) in a contact point (25) during closing of the plier limbs (2, 3), is realized symmetrical with respect to a central plane (M) extending transverse to the cutting plane (E) and through the axis of rotation (x) and the contact point (25) .

7. The pliers according to one of claims 5 or 6, **characterized in that** the opening contour (K) between the first and second cutting edges (17, 18) of the shear blades (15, 16), which remains in the position of an initial contact between the first shear blade (15) and the second shear blade (16) in a contact point (25) during closing of the plier limbs (2, 3), is realized asymmetrical with respect to a central plane (M) extending transverse to the cutting plane (E) and through the axis of rotation (x) and the contact point (25).

8. The pliers according to one of claims 6 or 7, **characterized in that** the opening contour (K) is formed by a first convex extent of the first cutting edge (17) and an opposite concave extent of the second cutting edge (18).

9. The pliers according to one of claims 6 to 8, **characterized in that** the opening contour (K) is formed by an additional concave extent of the first cutting edge (17) opposite of the concave extent of the second cutting edge (18).

10. The pliers according to one of claims 8 or 9, **characterized in that** the concave extent of the first cutting edge (17) has a smaller degree of curvature than the concave extent of the second cutting edge (18) .

## Revendications

1. Pince (1) avec une première et une deuxième branche de pince (2, 3) qui sont maintenues dans une région d'articulation (4) avec un axe de rotation (x) de manière à pouvoir tourner l'une par rapport à l'autre, dans laquelle les branches de pince (2, 3) forment d'un côté de la région d'articulation (4) une région de gueule (8) et de l'autre côté de la région d'articulation (4) des parties de poignée (6, 7), dans laquelle en outre la région de gueule (8) présente une configuration de coupe (S) avec des premières lames (11) sur la première branche de pince (2) et des deuxièmes lames (12) sur la deuxième branche de pince (3) coopérant pour dénuder des câbles (39), dans laquelle les premières et deuxièmes lames (11, 12) présentent des évidements (34) s'étendant en demicercles, dans laquelle les premières et deuxièmes lames (11, 12) se complètent en outre avec leurs évidements (34) lorsque la pince (1) est fermée pour former une section transversale d'ouverture libre (35), dans laquelle deux premières et deuxièmes lames (11, 12) agencées côte à côte laissent entre elles une nervure intermédiaire (36) qui, vue depuis un point (P) de l'évidement associé (34) le plus bas dans la direction de fermeture (r) de la pince (1), s'étend sur moins qu'une dimension d'ouverture maximale (k) de la section transversale d'ouverture (35) dans la direction de fermeture (r) de la pince (1), dans laquelle les évidements (34) sont chacun dépassés de l'autre côté de la nervure intermédiaire (36) par une nervure de séparation qui, vu d'un point (P) de l'évidement associé (34) le plus bas dans la direction de fermeture (r) de la pince (1), s'étend sur plus qu'une dimension d'ouverture maximale (k) de la section transversale d'ouverture (35) dans la direction de fermeture (r) de la pince (1), et dans laquelle les lames (11, 12) sont réalisées unitairement de matière avec la branche de pince associée, **caractérisée en ce que** les nervures intermédiaires (36) des deux branches de pince (2, 3) sont déplacées l'une au-dessus de l'autre dans une région lorsque la pince (1) est fermée.

2. Pince selon la revendication 1, **caractérisée en ce qu'**une arête de bord (42) de la nervure de séparation (14) tournée vers la première ou la deuxième lame (11, 12) est à forme graduelle de manière à obtenir, vu à l'état fermé de la pince (1), en commençant à peu près à la moitié de la dimension d'ouverture de la section transversale d'ouverture (35), un élargissement graduel de la section transversale d'ouverture (35) ou un rétrécissement (43) de la nervure de séparation (14) transversalement à la direction de fermeture (r) de la pince (1), et/ou, de préférence, que le rétrécissement graduel (43) est réalisé à peu près dans la région d'une demilongueur d'extension (j) de la nervure de séparation (14).

3. Pince selon l'une des revendications précédentes, **caractérisée en ce que** des lames voisines (11, 12) forment des sections transversales d'ouverture (35) de tailles différentes lorsque la pince (1) est fermée.

4. Pince selon l'une des revendications précédentes, **caractérisée en ce que** plusieurs nervures de séparation (14, 14') sont formées sur une branche de pince (2, 3) et **en ce que** deux nervures de séparation (14, 14') présentent des longueurs d'extension différentes (j, j'), et/ou, de préférence, que la longueur d'extension (j') d'une première nervure de séparation (14') d'une branche de pince (2, 3) correspond à environ 2 fois la longueur d'extension (j) de la deuxième nervure de séparation (14) de la même branche de pince (2, 3), et/ou, de préférence, que les nervures intermédiaires et/ou de séparation (36, 14) sont formées sur les deux branches de pince (2, 3).

5. Pince selon l'une des revendications précédentes, **caractérisée en ce que**, lorsque la pince (1) est fermée par rapport à un plan de cisaillement (E), des premières et deuxième lames de cisaillement sont superposées à la manière de ciseaux et un axe de rotation traverse un plan médian (M) lorsqu'il s'étend perpendiculairement au plan de cisaillement (E) à l'état fermé, **en ce que**, en outre, les lames de cisaillement (15, 16) sont superposées dans une région éloignée de l'articulation sur une plus grande distance (u) dans la direction d'ouverture de la pince (1) que dans une région plus proche de l'articulation, **en ce que** la première lame de cisaillement (15) présente une arête de coupe (17) avec différentes régions de coupe (19, 21 et 23), dans laquelle une première région de coupe (19), qui est donnée dans la région de la dimension (u) de plus grand recouvrement, présente, par rapport à la longueur totale (l) de l'arête de coupe (17), un tronçon d'arête de coupe (20) descendant en direction de la région d'articulation (4) par rapport au plan médian (M) avec une première dimension de descente (c') par rapport à la longueur totale (l) de l'arête de coupe (17), dans laquelle une deuxième région de coupe (21) présente une deuxième dimension de descente (c) supérieure à la première dimension de descente (c') et dans laquelle une troisième région de coupe (23) présente une troisième dimension de descente inférieure aux première et deuxième dimensions de descente (c, c'), la longueur (d, e, f) de chaque région de coupe (19, 21, 23) correspondant à un cinquième ou plus de la longueur totale (l) de la lame de cisaillement (15).

6. Pince selon la revendication 5, **caractérisée en ce que**, lors de la fermeture des branches de pince (2, 3) dans la position d'un premier contact entre la première lame de cisaillement (15) et la deuxième lame de cisaillement (16) en un point de contact (25), le contour d'ouverture restant (K) entre les première et deuxième arêtes de coupe (17, 18) des lames de cisaillement (15, 16) est symétrique par rapport à un plan médian (M) s'étendant transversalement au plan de coupe (E) et passant par l'axe de rotation (x) et le point de contact (25).

7. Pince selon l'une des revendications 5 ou 6, **caractérisée en ce que**, lors de la fermeture des branches de pince (2, 3) dans la position d'un premier contact de la première lame de cisaillement (15) et de la deuxième lame de cisaillement (16) en un point de contact (25), le contour d'ouverture restant (K) entre les première et deuxième arêtes de coupe (18, 17) des lames de cisaillement (15, 16) est asymétrique par rapport à un plan médian (M) s'étendant transversalement au plan de coupe (E) et passant par l'axe de rotation (x) et le point de contact (25).

8. Pince selon l'une des revendications 6 ou 7, **caractérisée en ce que** le contour d'ouverture (K) est donné par un premier tracé convexe de la première arête de coupe (17) avec un tracé concave opposé de la deuxième arête de coupe (18).

9. Pince selon l'une des revendications 6 à 8, **caractérisée en ce que** le contour d'ouverture (K) est donné par un autre tracé concave de la première arête de coupe (17) opposé au tracé concave de la deuxième arête de coupe (18).

10. Pince selon l'une des revendications 8 ou 9, **caractérisée en ce que** le tracé concave de la première arête de coupe (17) est pourvu d'une mesure de courbure inférieure à celle du tracé concave de la deuxième arête de coupe (18).
